# EUROPÄISCHE PATENTSCHRIFT

(11) **EP 2 113 644 B1**
(45) Veröffentlichungstag und Bekanntmachung des Hinweises auf die Patenterteilung: **05.07.2017**
(21) Anmeldenummer: 09100166.9
(22) Anmeldetag: 05.03.2009
(51) Int. Cl.: F01N 3/20, F01N 3/28, F01N 13/00, F01N 13/18

(54) **Optimierung und Aufrechterhaltung der katalytischen Aktivität insbesondere bei niedrigen Abgastemperaturen**
Optimisation and maintenance of the catalytic activity in particular at low exhaust gas temperatures
Optimisation et maintien de l'activité catalytique notamment lors de températures de gaz d'échappement basses

(30) Priorität: 28.04.2008 DE 102008001424
(43) Veröffentlichungstag der Anmeldung: 04.11.2009
(73) Patentinhaber: ROBERT BOSCH GMBH, 70442 Stuttgart (DE)
(72) Erfinder: Liemersdorf, Dirk, 70839 Gerlingen (DE); Gloeckle, Markus, 70192 Stuttgart (DE)

(56) Entgegenhaltungen:
- EP-A1- 0 378 797
- CH-A5- 663 253
- DE-A1- 19 626 837
- DE-A1-102006 014 073
- JP-A- H07 119 441
- JP-A- H08 312 333
- JP-A- 2002 047 925
- JP-A- 2004 270 690
- JP-A- 2007 056 786
- JP-A- 2007 315 318
- US-A1- 2005 284 139
- US-B1- 6 233 926

## Beschreibung

Die Erfindung betrifft eine Katalysatoranordnung, nachstehend auch als Katalysator bezeichnet, für die Behandlung von Abgas einer Brennkraftmaschine, wobei die Katalysatoranordnung in einem gemeinsamen Gehäuse mindestens zwei, unterschiedlich auf das Abgas wirkende, jeweils eine Anströmfläche und eine Ausströmfläche für das Abgas aufweisende Substrate aufweist, und mit mindestens einer Einrichtung zur Zuführung und/oder Abführung des Abgases zu/von mindestens einem der Substrate ausgestattet ist.

### Stand der Technik

Kraftfahrzeuge mit Brennkraftmaschinen erzeugen über ihr Abgas Stickoxidemissionen, welche aus Umweltschutzgründen und aus gesetzlichen Bestimmungen heraus reduziert werden müssen. Um dies zu erreichen, wird im Stand der Technik eine nachmotorische Stickoxidminderung über einen Stickoxid-Speicherreduktionskatalysator oder, in einem alternativen Verfahren, über eine selektive katalytische Reduktion unter Einspritzung einer Harnstoff-/Wasserlösung in das Abgas herbeigeführt. Um sehr geringe Emissionen zu erreichen, werden auch motorische Stickoxid-Rohemissionen durch entsprechende Maßnahmen weiter reduziert. Derartige Maßnahmen sind beispielsweise eine starke Erhöhung der Abgasrückführrate oder die Implementierung einer teilhomogenisierten Verbrennung. Parallel zur Senkung der Stickoxidemissionen müssen auch der Kraftstoffverbrauch und der Kohlendioxid-Ausstoß der Fahrzeuge weiter reduziert werden. Durch Verbrauchsoptimierungen der Brennkraftmaschinen sinken in Folge eines höheren Wirkungsgrades die Abgastemperaturen. Aufgrund sehr niedriger Abgastemperaturen von dann weniger als 200°C und steigenden Kohlenmonoxid- und Kohlenwasserstoffkonzentrationen können das Kohlenmonoxid und die Kohlenwasserstoffe nur noch eingeschränkt oder gar nicht in motornah verbauten Oxidationskatalysatoren oxidiert werden. Spezielle Oxidationskatalysatoren, die bei sehr tiefen Temperaturen - unterhalb 160°C - aktiv sind besitzen den Nachteil, dass sie bei hohen Abgastemperaturen sehr stark altern, was auf Sintereffekte von Edelmetallpartikeln oder einer oberflächenreichen Grundbeschichtung, die als Trägermaterial für die katalytisch aktiven Komponenten dient, zurückzuführen ist. Durch diese Alterungseffekte verlieren die Oxidationskatalysatoren ihre anfänglich sehr gute Aktivität bei tiefen Temperaturen sehr schnell, da bei einer Hochlastfahrt, einer Volllastfahrt, einer thermischen Partikelfilterregeneration oder einer Desulfatisierung eines Speicher-/Reduktionskatalysators die Abgastemperaturen durch Motoreingriffe auf 400°C bis 650°C angehoben werden müssen. Insbesondere die dabei im Katalysator frei werdenden großen Energiemengen stellen eine hohe thermische Belastung für den Katalysator dar. Um sowohl bei niedrigen als auch bei hohen Abgastemperaturen eine gute Oxidation durch den Katalysator dauerhaft erreichen zu können, werden unterschiedliche Substrate mit unterschiedlichen katalytischen, insbesondere oxidativen Eigenschaften eingesetzt.

In der Schrift JP 207085242 wird ein um eine Mittelachse drehbarer Katalysator beschrieben, der auf einer Anströmseite unterschiedlich beschichtete Katalysatorbereiche aufweist. Die unterschiedlich beschichteten Katalysatorbereiche werden abhängig von einem Betriebszustand der Brennkraftmaschine in eine ortsfeste Abgasströmung hineingedreht, um den Abgasstrom durch den ausgebildeten Katalysatorbereich für eine Oxidation und/oder Reduktion hindurchzuleiten.

Die Schrift DE 102 41 065 offenbart eine Abgasströmungsführung über zwei parallele Oxidationspfade, welche wahlweise betrieben werden können, wobei jedem Oxidationspfad eine Einrichtung zur Oxidation von Stickoxiden zugeordnet ist.

Die Offenlegungsschrift DE 10 2006 014 073 A1 beschreibt eine Katalysatoranordnung mit einem Hauptkatalysator und einem Nebenkatalysator für eine Behandlung von Abgas einer Brennkraftmaschine. Haupt- und Nebenkatalysator sind in einem Gehäuse der Katalysatoranordnung angeordnet. Das Gehäuse weist eine Strömungsleiteinrichtung in Form eines verstellbaren Klappenelements auf. Ein in das Gehäuse eingeleiteter Abgasstrom wird in Abhängigkeit einer Stellung der Strömungsleiteinrichtung entweder nur zu dem Hauptkatalysator oder zu Haupt- und Nebenkatalysator gleichzeitig geleitet. Die Patentschrift US 6,233,926 B1 offenbart ein Partikelreinigungssystem für eine Brennkraftmaschine. Dabei sind in einem Gehäuse Partikelreinigungsmodule und ein jeweils einem Partikelreinigungsmodul zugeordnetes Ventil angeordnet. Das Ventil deckt in einer ersten Stellung eine Anströmfläche des ihm zugeordneten Partikelreinigungsmoduls ab, in einer zweiten Stellung gibt das Ventil die Anströmfläche frei. Ein in das Gehäuse eingeleiteter Abgasstrom trifft in Abhängigkeit der Stellung des Ventils entweder auf eine freiliegende Anströmfläche eines Partikelreinigungsmoduls oder auf das die Anströmfläche bedeckende Ventil. Die Offenlegungsschrift JP 2007315318 A beschreibt, einen ein Abgasstrom mittels eines Abgasführungskanals zu einem Katalysator zu leiten. Der Abgasführungskanal ist axial verlagerbar, wobei in Abhängigkeit einer axialen Verschiebestellung des Abgasführungskanals ein größerer oder kleinerer Bereich der Anströmfläche des Katalysators von dem Abgasstrom getroffen wird.

Bei der Verwendung mehrer Oxidationssubstrate - Katalysatorsubstrate - innerhalb eines Katalysatorgehäuses soll eine exakte Abgasführung vorgenommen werden, um insbesondere die Katalysatorsubstrate zu schützen, die eine Aktivität bei tiefen Temperaturen aufweisen, damit sie diese Aktivität dauerhaft beibehalten.

### Offenbarung der Erfindung

Erfindungsgemäß ist vorgesehen, dass die Einrichtung als Maskiereinrichtung ausgebildet ist und mindestens ein Maskierelement aufweist, das eine Maskierfläche besitzt, die größer als oder gleich groß wie die jeweilige Anströmfläche und/oder Ausströmfläche ist. Als Substrate werden Stoffverbünde aus einem Trägermaterial und einer darauf aufgebrachten katalytisch aktiven Beschichtung verstanden. Das Maskierelement übernimmt die Aufgabe das zu durchströmende Substrat auszuwählen indem es die entsprechende Anströmfläche und/oder Ausströmfläche in einer entsprechenden Stellung oder Ausgestaltung entweder abdeckt oder freigibt. Die Stellung des Maskierelements kann dabei insbesondere von einer Temperatur des Abgases und/oder einem Arbeitspunkt des Motors und/oder einem Massenstrom des Abgases und/oder einem Alterungszustandes des Substrates abhängig gemacht werden, woraus eine Auswahl des momentan optimalen Substrats mit einer optimalen katalytischen, insbesondere oxidativen Wirkung für das vorliegende Abgas getroffen wird. Da dadurch verhindert wird, dass temperaturempfindliche Substrate hohen Abgastemperaturen ausgesetzt werden, ist keine oder nur eine sehr geringe thermische Alterung, zu befürchten. Somit wird in temperaturempfindlichen Substraten eine hohe Tieftemperaturaktivität, insbesondere Oxidationsaktivität, dauerhaft beibehalten.

Nach einer Weiterbildung der Erfindung ist vorgesehen, dass die Maskierfläche kleiner als eine Gesamtquerschnittsfläche der Substrate ist. Die Gesamtquerschnittsfläche der Substrate ergibt sich aus der Summe der Anströmflächen oder aus der Summe der Ausströmflächen. Durch die derartige Ausgestaltung der Maskierfläche wird verhindert, dass alle Substrate gleichzeitig maskiert werden, was den gesamten Abgasstrom unterbrechen würde.

Nach einer Weiterbildung ist vorgesehen, dass die Maskierfläche eine Öffnungsfläche des Maskierelements oder eine Abdeckfläche des Maskierelements ist. Die Ausgestaltung der Maskierfläche als Abdeckfläche wird eingesetzt, um den Abgasstrom an mindestens einer der Anströmflächen und/oder der Ausströmflächen zu unterbrechen, wodurch eine Abgasströmung durch das entsprechende Substrat oder die entsprechenden Substrate verhindert wird. Die Ausgestaltung der Maskierfläche als Öffnungsfläche ist dann vorteilhaft, wenn Abgas durch das Maskierelement selbst hindurchgeleitet wird. Die ausgewählte Anströmfläche und/oder Ausströmfläche für den Abgasstrom wird somit an der Position der Öffnungsfläche freigegeben.

Nach einer Weiterbildung der Erfindung ist vorgesehen, dass die Öffnungsfläche der Anströmfläche und/oder der Ausströmfläche und/oder dass die Abdeckfläche der Anströmfläche oder der Ausströmfläche entspricht. Es ist insbesondere vorteilhaft, wenn die Maskierfläche eine Deckungsgleichheit mit der zu maskierenden Anströmfläche und/oder zu maskierenden Ausströmfläche aufweist. Auf diese Weise wird verhindert, dass Abgas in nicht ausgewählte Substrate geleitet wird und gleichzeitig wird die gewählte Anströmfläche optimal genutzt.

Nach einer Weiterbildung ist vorgesehen, dass die Maskierfläche an einer Abdeckklappe ausgebildet ist. Damit ist es möglich, durch Klappen der Abdeckklappe die Maskierfläche - in Abgasströmungsrichtung gesehen - vor mindestens eine Anström- und/oder Ausströmfläche zu positionieren, um eine Abdeckung zu erreichen. Dabei kann die Abdeckklappe in Verbindung mit dem Gehäuse ein Dichtelement bilden. Auch kann die Abdeckklappe einen Maskierraum einschließen, welcher zwischen Anströmfläche und/oder Ausströmfläche, der Maskierfläche und dem Gehäuse angeordnet ist. Erfindungsgemäß ist vorgesehen, dass die Maskierfläche eine Öffnungsfläche ist, die an einem flexiblen Abgasführungskanal eine Kanalöffnung bildet. Die Auswahl des durchströmten Substrats wird dadurch erreicht, dass die Kanalöffnung vor die entsprechende Anströmfläche oder nach der entsprechenden Ausströmfläche variabel positioniert wird. Dadurch wird erreicht, dass das Abgas strömungstechnisch optimal durch den Katalysator geleitet wird.

Nach einer Weiterbildung der Erfindung ist vorgesehen, dass der Abgasführungskanal ein flexibler Schlauch, insbesondere ein Wellschlauch ist. Die Ausgestaltung des Kanals als Schlauch, insbesondere Wellschlauch, bietet den Vorteil einer einfachen Konstruktion und Handhabung. Auf diese Weise kann, auch bei mehreren Substraten, die Maskierfläche in verschiedene Richtungen mittels einer entsprechenden Verschiebevorrichtung bewegt werden, wobei ein strömungstechnisch optimaler Verlauf für das Abgas stets erhalten bleibt.

Nach einer Weiterbildung ist vorgesehen, dass die Maskierfläche eine Abdeckfläche ist, die quer zur Strömungsrichtung verlagerbar ist. Eine Abdeckfläche, die quer zur Abgasströmungsrichtung verlagerbar ist, bietet den Vorteil, dass bei einer Verstellung der Maskiereinrichtung keine Druckunterschiede gegenüber der Abgasströmung überwunden werden müssen. Dabei kann auch vorgesehen sein, dass das entsprechende Maskierelement innerhalb einer Führungsvorrichtung für eine entsprechende Maskierung verschoben wird, was zu einer einfachen Abdichtung und sicheren Handhabung führt.

Nach einer Weiterbildung ist vorgesehen, dass die Abdeckfläche um eine Achse verschwenkbar oder verdrehbar gelagert ist, die im Wesentlichen in Strömungsrichtung verläuft. Dabei kann die Abdeckfläche derart gestaltet sein, dass sie ein oder mehrere Substrate gleichzeitig abdeckt. Ferner besteht die Möglichkeit mehrere Abdeckflächen gleichzeitig einzusetzen, die insbesondere unabhängig voneinander verdrehbar gelagert sind. Dabei können die Abdeckflächen sowohl Anströmflächen als auch Ausströmflächen abdecken. Mittels einer Mehrzahl aus unabhängig gelagerten Abdeckflächen kann die Zahl der durchströmten Katalysatorsubstrate variiert werden, wobei die Abdeckflächen gleich oder unterschiedlich ausgeführt sein können.

Nach einer Weiterbildung ist vorgesehen, dass die Maskierfläche eine Kreis- und/oder Ellipsenausschnittsfläche ist. Insbesondere bei einer verdrehbar gelagerten Abdeckfläche ist es von Vorteil, wenn diese als Kreisausschnittsfläche ausgeführt ist, da sie im, zum Kreisausschnitt zugehörigen, Kreismittelpunkt drehbar gelagert werden kann, wobei dann der Umfang des Kreisausschnitts der Rotationsbewegung folgt. Auf diese Weise kann insbesondere in einem runden Gehäuse eine hohe Abdichtung erreicht werden.

Nach einer Weiterbildung ist vorgesehen, dass die Maskierfläche eine Ringfläche ist, die in oder etwa in Strömungsrichtung - je nach Maskiergrad - hin- und herverlagerbar angeordnet ist. Bei dieser Art der Maskierung wird in einer Stellung ein Ringbereich einer Anströmfläche maskiert, wobei durch eine entsprechende Hin- oder Herverlagerung des Maskierelements innerhalb des Gehäuses gesteuert wird, ob alle Anströmflächen und/oder Ausströmflächen gleichzeitig für die Abgasströmung freigegeben werden. Dabei ist eine hin- und herverlagerbar angeordnete Maskierfläche nicht auf eine Ringfläche beschränkt, sondern kann insbesondere zusätzlich teilweise ausgefüllt oder weiter geöffnet sein. Dies ermöglicht unterschiedliche Kombinationen von Anströmflächen auf diese Weise abzudecken und/oder freizugeben.

Grundsätzlich kann das Abgas nach dem Durchströmen der entsprechenden Substrate wieder zusammengeführt werden, um einen nachfolgenden Katalysator und/oder einem nachfolgenden Partikelfilter zugeführt zu werden.

### Kurze Beschreibung der Zeichnungen

Die Zeichnungen veranschaulichen die Erfindung anhand mehrerer Ausführungsbeispiele und zwar zeigt
Figur 1 ein Strukturbild eines Abgassystems,
Figur 2 ein Prinzipbild eines Katalysators mit drei Substraten,
Figur 3 ein Querschnitt des Katalysators aus Figur 2,
Figur 4 eine erste Ausführungsform einer Maskiereinrichtung,
Figur 5 eine zweite Ausführungsform der Maskiereinrichtung,
Figur 6 eine dritte Ausführungsform der Maskiereinrichtung,
Figur 7 eine Seitenansicht der Maskiereinrichtung aus Figur 6,
Figur 8 die Maskiereinrichtung aus Figur 6 in einer ersten Maskierstellung,
Figur 9 eine Seitenansicht der Maskiereinrichtung aus Figur 8,
Figur 10 die Maskiereinrichtung aus Figur 6 in einer zweiten Maskierstellung,
Figur 11 eine Seitenansicht der Maskiereinrichtung aus Figur 10,
Figur 12 eine vierte Ausführungsform der Maskiereinrichtung,
Figur 13 die Maskiereinrichtung aus Figur 12 in einer zusätzlichen Maskierstellung,
Figur 14 eine fünfte Ausführungsform der Maskiereinrichtung,
Figur 15 die Maskiereinrichtung aus Figur 14 in einer zusätzlichen Maskiereinstellung,
Figur 16 eine sechste Ausführungsform der Maskiereinrichtung,
Figur 17 die Maskiereinrichtung aus Figur 16 in einer erste Maskierstellung,
Figur 18 die Maskiereinrichtung aus Figur 16 in einer zweiten Maskiereinstellung und
Figur 19 eine siebte Ausführungsform der Maskiereinrichtung.

### Ausführungsform(en) der Erfindung

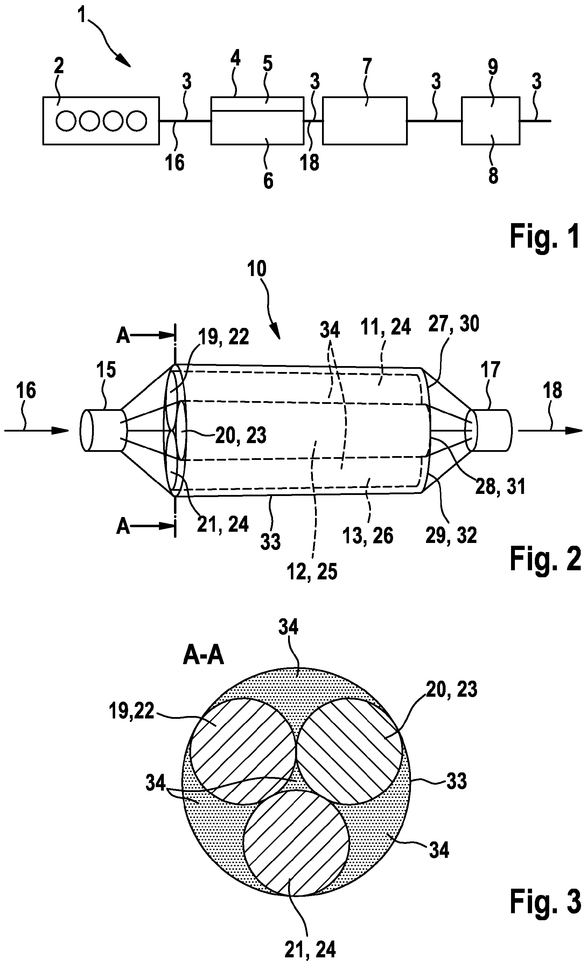

Die Figur 1 zeigt einen schematischen Abgasstrang 1, mit einer Brennkraftmaschine 2, welche Abgas 16 erzeugt und dieses durch Abgasleitungsrohre 3 ableitet. Ausgehend von der Brennkraftmaschine 2 wird das Abgas 16 über ein Abgasleitungsrohr 3 an einen Katalysator 4 weitergeleitet, welcher hier zwei Substrate 5 und 6 aufweist, die unterschiedlich auf das Abgas 16 wirken, wodurch ein verändertes Abgas 18 entsteht. Ausgehend von dem Katalysator 4 wird das Abgas 18 über ein Abgasleitungsrohr 3 zu einem Partikelfilter 7 geführt. Dessen ausströmendes Abgas 18 wird über ein weiteres Abgasleitungsrohr 3 an einen zweiten Katalysator 8 geleitet, welcher auf herkömmliche Weise mit einem Substrat 9 ausgeführt ist. In dem Katalysator 4 ist das Substrat 5 für niedrige Abgastemperaturen optimiert, wohingegen das Substrat 6 für hohe Temperaturen geeignet ist. Da niedrige Abgastemperaturen in der Regel bei niedriger Last der Brennkraftmaschine entstehen, wird in einem derartigen Zustand auch weniger Abgas 16 erzeugt. Aus diesem Grund ist für niedrige Abgastemperaturen weniger Substrat 5 notwendig als Substrat 6 für hohe Abgastemperaturen. Das Substrat 5 und 6 kann derart ausgestaltet sein, dass es eine oberflächenvergrößernde Grundbeschichtung aufweist, den sogenannten Washcoat, auf dem Edelmetalle, insbesondere Platin und/oder Palladium und/oder Ruthenium in sehr kleinen Clustern, die kleiner als 5 nm insbesondere kleiner als 2 nm sind, feinst verteilt sind. Ein derartiges Substrat 5 ist beispielsweise das für eine Oxidation von Kohlenwasserstoffen in Restaurantgasen eingesetzte System Ru/TiO₂, welches bei einer Temperatur von 140°C 90% an eingeleitetem Propan oxidiert.

Die Figur 2 zeigt exemplarisch eine Katalysatoranordnung 10, die drei Substrate 11, 12 und 13 aufweist, wobei diese in Kreiszylindern 14, 25 und 26 angeordnet sind. Der Katalysator 10 weist an seinem Gehäuse 33 einen Abgaszuführstutzen 15 auf, in den das Abgas 16 eingeleitet wird. Weiter weist die Katalysatoranordnung 10 einen Abgasabführstutzen 17 auf, aus dem das durch die Katalysatoranordnung 10 veränderte Abgas 18 abgeführt wird. Die Kreiszylinder 14, 25 und 26 haben jeweils eine Stirnfläche 19, 20 und 21, welche als Anströmflächen 22, 23 und 24 ausgebildet sind, auf die das Abgas 16 nach der Einleitung in die Katalysatoranordnung 10 trifft. Ferner weisen die Kreiszylinder 14, 25 und 26 jeweils eine den Stirnflächen 19, 20 und 21 abgewandten "Bodenfläche" 27, 28 und 29 auf. Die Bodenflächen 27, 28 und 29 sind jeweils als Ausströmfläche 30, 31 oder 32 ausgebildet. Aus den Ausströmflächen 30, 31 und 32 tritt das in die jeweilig zugehörige Anströmfläche 22, 23 oder 24 eingeleitete Abgas 16 wieder als verändertes Abgas 18 aus und wird über den Abgasabführstutzen 17 aus der Katalysatoranordnung 10 ausgeleitet. Ferner ist in Freiräume zwischen den Kreiszylindern 14, 25 und 26 und dem Gehäuse 33 Dämmmaterial 34 eingebracht. Das Dämmmaterial 34 schützt empfindliches Substrat 11, 12 und/oder 13 vor einer Hitzebeaufschlagung aus einem der anderen Substrate 11, 12 oder 13.

Die Figur 3 zeigt einen Querschnitt der Katalysatoranordnung 10 entlang einer Schnittachse A-A aus Figur 2. Die parallele Anordnung mehrerer Substrate 11, 12 und 13 kann auch segmentweise erfolgen, wodurch das Gehäuse 33 besser ausgenutzt wird. Die parallele Anordnung von mehreren Substraten 11, 12 und 13 in einem Katalysator hat ferner den Vorteil, dass in den einzelnen Substraten 11, 12 und 13 unterschiedlich katalytisch aktive Stoffe eingesetzt werden können und diese vor einem Zusammenfügen zur Katalysatoranordnung 10 bei individuell unterschiedlichen Temperaturen kalziniert und stabilisiert werden können.

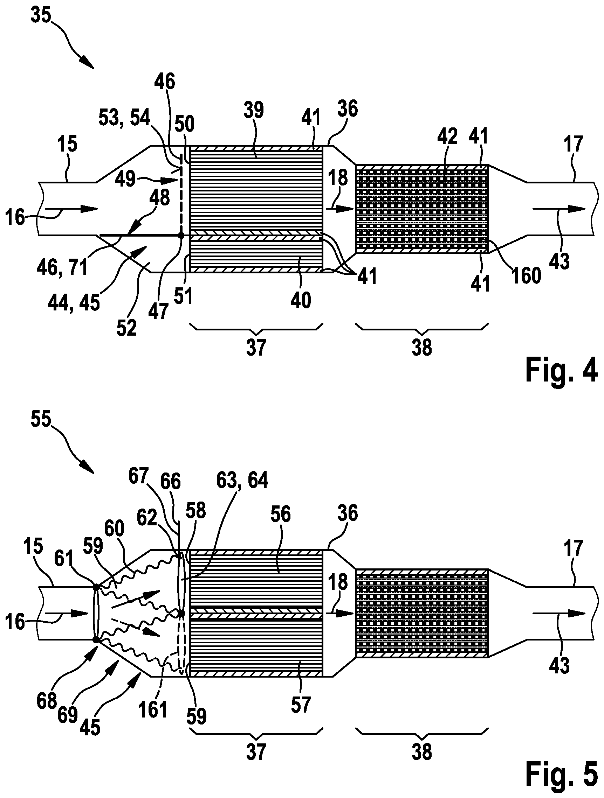

Die Figur 4 zeigt eine nicht erfindungsgemäße Katalysatoranordnung 35 mit einem Gehäuse 36, welches einen ersten Katalysationsbereich 37 und einen zweiten Katalysationsbereich 38 aufweist. Im Katalysationsbereich 37 befinden sich zwei unterschiedliche Substrate 39 und 40, wobei das Substrat 40 für eine Oxidation des Abgases 16 bei niedriger Temperatur und das Substrat 39 für eine Oxidation des Abgases 16 bei hoher Temperatur ausgelegt ist. Zwischen den Substraten 39 und 40 sind Dichtelemente 41 eingebracht, welche ein Vorbeiströmen des Abgases 16 an den Anströmflächen 51 und 50 im Gehäuse 36 verhindern. Der Katalysationsbereich 38 weist ein einzelnes Substrat 42 auf, das ebenfalls mit Dichtelementen 41 im Gehäuse 36 integriert ist. Der Katalysationsbereich 38 ist ein den beiden Substraten 39 und 40 nachgeschalteter herkömmlicher Katalysator 160 oder ein Partikelfilter, welcher ein nochmals verändertes Abgas 43 erzeugt. Die Katalysatoranordnung 35 weist eine Einrichtung 44 auf, welche sich - in Abgasströmungsrichtung gesehen - vor dem Katalysationsbereich 37 befindet. Die Einrichtung 44 ist als Maskiereinrichtung 45 ausgebildet, welche ein als Abdeckklappe 46 ausgebildetes Maskierelement 71 aufweist. Die Abdeckklappe 46 ist um eine Achse 47 klappbar gelagert und wird in einer ersten Maskierstellung 48, wobei eine Maskierfläche 53 in der Abgasströmung liegt, und einer zweiten Maskierstellung 49, wobei die Maskierfläche 53 quer zu der Abgasströmung liegt, dargestellt. Die Abdeckklappe 46 ist in der ersten Maskierstellung 48 durchgehend und in der zweiten Maskierstellung 49 gestrichelt dargestellt. Steht die Abdeckklappe 46 in der ersten Maskierstellung 48, dann wird das Abgas 16 in die Anströmfläche 50 des Substrates 39 eingeleitet. Die Anströmfläche 51 des Substrates 40 wird somit vor Beaufschlagung mit Abgas 16 von der Abdeckklappe 46 geschützt. Dabei bildet der Rand der Abdeckklappe 46 zusammen mit dem Gehäuse 36 ein Dichtelement 162 aus, wobei diese Komponenten dann gemeinsam mit der Anströmfläche 51 einen Maskierraum 52 ausbilden. In der zweiten Maskierstellung 49 bildet die Maskierfläche 53 eine Abdeckfläche 54, welche die gesamte Anströmfläche 50 des Substrates 3 in Abgasströmungsrichtung abdeckt. Dadurch kann Abgas 16 nicht in das Substrat 39 eindringen und wird so durch das Substrat 40 hindurchgeleitet. Das aus den Substraten 39 und/oder 40 austretende Abgas 18 wird anschließend gemeinsam durch den Katalysationsbereich 38 geführt und mittels des Abgasabführstutzens 17 als Abgas 43 aus der Katalysatoranordnung 35 herausgeführt.

Die Figur 5 zeigt eine erfindungsgemäße Katalysatoranordnung 55, welche grundsätzlich der Katalysatoranordnung 35 der Figur 4 gleicht, wobei der Katalysationsbereich 37 und die Einrichtung 44 anderweitig ausgestaltet sind. Der Katalysationsbereich 37 weist zwei Substrate 56 und 57 auf. Diese besitzen jeweils eine Anströmfläche 58 und 59, welche eine gleiche Flächengröße und Flächenform aufweisen. Die Maskiereinrichtung 45 ist als Abgasführungskanal 59 ausgeführt, welcher ein flexibler Schlauch, hier ein Wellschlauch 60 ist. Das - in Abgasströmungsrichtung gesehene - vordere Ende 61 des Wellschlauchs 60 ist mit dem Abgaszuführstutzen 15 derart verbunden, dass das Abgas 16 aus dem Abgaszuführstutzen 15 in den Wellschlauch 60 vollständig eingeleitet wird. Das zweite in Abgasstromrichtung gesehen hintere Ende 62 kann quer zur Strömungsrichtung verlagert werden. Dabei bildet ein Wellschlauchquerschnitt 63 am hinteren Ende 62 ein Maskierelement 161, mit einer Maskierfläche 64, welche als Öffnungsfläche 65 ausgestaltet ist. Das hintere Ende 62 kann mittels einer Stelleinrichtung 66, beispielsweise einem Stangenelement 67, quer zur Abgasströmungsrichtung verlagert werden. In einer ersten Maskierstellung 68 leitet der Wellschlauch 60 durch die Öffnungsfläche 65 das Abgas 16 in das Substrat 56. In einer zweiten Maskierstellung 69, welche gestrichelt dargestellt ist, wird das Abgas 16 über den Wellschlauch 60 an die Anströmfläche 59 und darüber in das Substrat 57 geleitet. Das aus den Substraten 56 und 57 ausströmende Abgas 18 wird anschließend in den Katalysationsbereich 38 geleitet, aus welchem das veränderte Abgas 43 aus der Katalysatoranordnung 55 austritt.

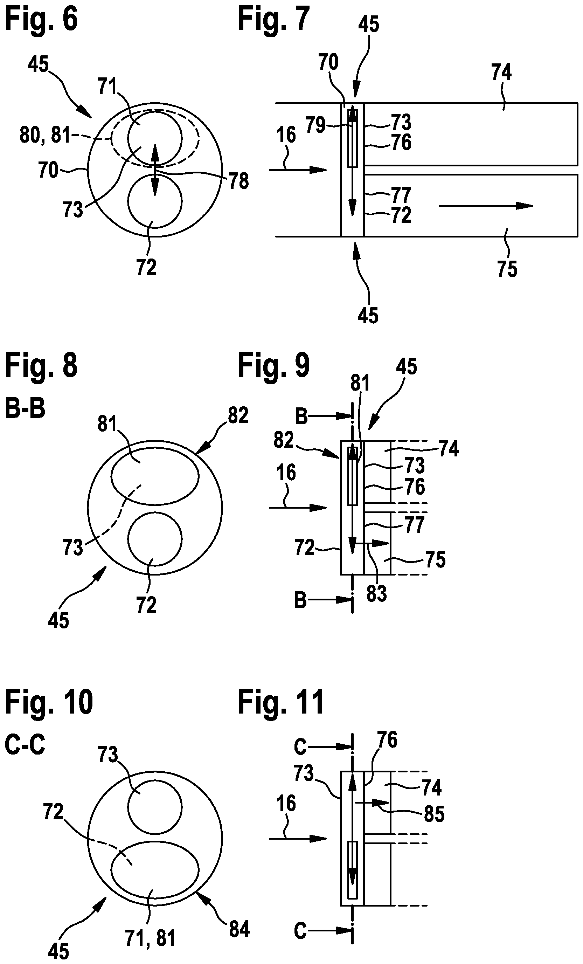

Die Figuren 6 und 7 zeigen - nicht erfindungsgemäß - eine Maskiereinrichtung 45 in einer Draufsicht und einer Seitenansicht, welche ein Führungselement 70 aufweist, in dem ein Maskierelement 71 geführt wird. Die Führungseinrichtung ist kreisförmig ausgeführt und besitzt zwei Durchbrüche 72 und 73 für eine Abgasdurchführung, wobei die Durchbrüche 72 und 73 hier ebenfalls kreisförmig ausgeführt sind. Die Maskiereinrichtung 45 liegt, wie in Figur 7 dargestellt, quer zur Abgasströmungsrichtung des Abgases 16, wobei es - in Abgasströmungsrichtung gesehen - vor zwei unterschiedlichen Substraten 74 und 75 positioniert ist. Die beiden Substrate sind dabei derart angeordnet, dass sie jeweils eine Anströmfläche 76 oder 77 aufweisen, welche durch einen Durchbruch 72 oder 73 des Führungselements 70 mit Abgas beaufschlagt werden können. Das Maskierelement 71 kann innerhalb des Führungselements 70 quer zur Abgasströmungsrichtung entlang des Pfeils 78 beziehungsweise des Pfeils 79 verlagert werden. Dabei besitzt das Maskierelement 71 eine Maskierfläche 80, welche als Abdeckfläche 81 ausgestaltet ist. Dabei ist die Gesamtfläche des Maskierelements 71 größer als die Anströmfläche 76 oder 77, welche durch den Durchmesser der Durchbrüche 72 und 73 definiert werden. Dadurch ist sichergestellt, dass die Abdeckfläche 81 die Durchbrüche 72 und 73 immer vollständig abdecken kann. Das Maskierelement 71 liegt für Führungszwecke innerhalb des Führungselements 70, weshalb es in Figur 6 in gestrichelter Darstellung gezeigt ist. Die elliptische Form des Maskierelements 71 ermöglicht, dass die Fläche, welche nicht für die Abdeckung der Durchbrüche 72 oder 73 verwendet wird, als Führungsfläche 82 eingesetzt werden kann, um eine sichere Verlagerung des Maskierelements 71 zwischen zwei Maskierstellungen zu ermöglichen. Zudem sind weitere geometrische Formen wie Rechteckform, Ellipsenform, Vieleckform oder eine Kombination dieser Formen für die Gestaltung der Durchbrüche 72 und 73 und des Maskierelements 71 denkbar. Bei dieser Ausführungsform kann eine Abdichtung innerhalb des Gehäuses eines Katalysators besonders einfach hergestellt werden, wobei eine Verschiebung des Maskierelements 71 sowohl auf elektrische, magnetische, mechanische oder hydraulische Weise erfolgen kann. Diese Einrichtung kann sowohl direkt vor dem Katalysatorelement als auch bei einer Mehrfachstrahlführung vor einer Separationsvorrichtung zum Katalysator mit einigem Abstand zum Katalysator verwendet werden.

Die Figuren 8 und 9 zeigen - nicht erfindungsgemäß - die Maskiereinrichtung 45 in einer ersten Maskierstellung 82, wobei die Maskiereinrichtung 45 in Figur 8 eine Schnittansicht entlang der Schnittachse B-B der Figur 9 darstellt. Die Figur 9 zeigt einen Ausschnitt aus der Figur 7. Das Maskierelement 71 ist in der ersten Maskierstellung 82 derart positioniert, dass es den Durchbruch 73 mittels seiner Abdeckfläche 81 vollständig abdeckt. Dadurch wird verhindert, dass, wie in Figur 9 dargestellt, Abgas 16 durch den Durchbruch 73 in das Substrat 74 über dessen Anströmfläche 76 eingeleitet wird. Aus diesem Grund strömt das Abgas 16 über den Durchbruch 72 entlang des Pfeils 83 durch die Anströmfläche 77 in das Substrat 75 ein.

Die Figuren 10 und 11 zeigen - nicht erfindungsgemäß - die Maskiereinrichtung 45 der Figur 6 in einer zweiten Maskierstellung 84. Dabei ist das Maskierelement 45 in Figur 10 im Querschnitt entlang einer Querschnittsebene C-C aus Figur 11 gezeigt. Die Abdeckfläche 81 des Maskierelements 71 befindet sich in einer Position, durch die die Abdeckfläche 81 den Durchbruch 72 abdeckt. Damit wird der Durchbruch 73 für eine Durchströmung durch Abgas 16 freigegeben In der zweiten Maskierstellung 84 wird das Abgas 16 über den freigegebenen Durchbruch 73 durch die Anströmfläche 76 des Substrats 74 geführt und auf diese Weise entlang des Pfeils 85 in das Substrat 74 eingeleitet.

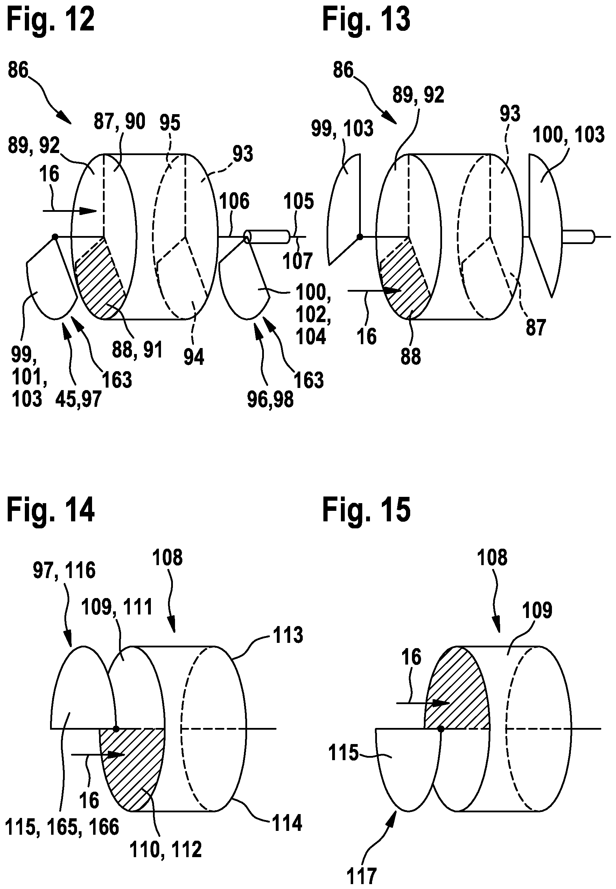

Die Figuren 12 und 13 zeigen - nicht erfindungsgemäß - ein geschichteten Substratkomplex 86, welcher kreiszylinderförmig ausgeführt ist und drei radial angeordnete Substratsegmente 87, 88 und 89 aufweist, wobei diese jeweils eine kreisausschnittsförmige Anströmfläche 90, 91 und 92 sowie jeweils eine kreisausschnittsförmige Ausströmfläche 93, 94, und 95 bilden. Dem Substratkomplex 86 sind zwei Einrichtungen 45 und 96 zugeordnet, welche als Maskiereinrichtungen 97 und 98 ausgebildet sind. Die Maskiereinrichtungen 97 und 98 weisen jeweils ein Maskierelement 99 beziehungsweise 100 auf, deren Maskierflächen 101 und 102 als Abdeckflächen 103 und 104 ausgeführt sind und sich in einer ersten Maskierstellung 161 befinden. Die Maskierflächen 101 und 102 haben Kreisausschnittsform, wobei die jeweilige Kreisausschnittsfläche deckungsgleich zu jeder Anströmfläche 90, 91 und 92 beziehungsweise Ausströmfläche 93, 94 und 95 ist. Entlang einer Längsachse 105 des Substratkomplexes 86 ist eine Achse 106 und eine Achse 107 vorgesehen, welche unabhängig voneinander verdrehbar sind. Das Maskierelement 99 ist dabei mit der Achse 106 wirkverbunden, wobei die Abdeckfläche 103 entsprechend eines Verdrehwinkels der Achse 106 über einer der Anströmflächen 90, 91 oder 92 positioniert wird. Die Achse 107 ist mit dem Maskierelement 100 wirkverbunden, wodurch das Maskierelement 100 entsprechend des Drehwinkels der Achse 107 mit seiner Abdeckfläche 104 vor einer der Ausströmflächen 93, 94 oder 95 positioniert wird. Aufgrund der unabhängigen Verdrehmöglichkeit der Achse 106 und 107 können die Maskierelemente 99 und 100 gleichzeitig eine Durchströmung unterschiedlicher Substratsegmente 87, 88 oder 89 verhindern. Dieser Zustand ist in Figur 13 dargestellt. Dabei ist eine zweite Maskierstellung 164 gezeigt, in der das Maskierelement 99 mit seiner Abdeckfläche 103 die Anströmfläche 92 des Substratsegments 89 abdeckt und gleichzeitig das Maskierelement 100 mit seiner Abdeckfläche 103 die Ausströmfläche 93 des Substratsegments 87 abdeckt. Aufgrund dieser Konstellation dieser beiden Maskierelemente 99 und 100 kann das zugeführte Abgas 16 nur noch durch das nicht maskierte Substratsegment 88 strömen.

Die Figuren 14 und 15 zeigen - nicht erfindungsgemäß - einen Substratkomplex 108, welcher aus zwei Substratsegmenten 109 und 110 besteht. Die Substratsegmente 109 und 110 weisen exemplarisch jeweils eine halbkreisförmige Anströmfläche 111 und 112 und jeweils eine halbkreisförmige Ausströmfläche 113 und 114 auf. Die Maskiereinrichtung 167 entspricht in ihrer Funktionsweise der Maskiereinrichtung 97 der Figur 12 und Figur 13, wobei ein Maskierelement 115 als Maskierfläche 165 eine Halbkreisfläche 166 aufweist. Dies entspricht auch der Ausgestaltung der Anströmflächen 111 und 112 der Substratsegmente 109 und 110. Somit besitzt die Maskiereinrichtung 167 zwei scharf abgegrenzte Maskierstellungen. Die Figur 14 zeigt eine erste Maskierstellung 116, in der das Maskierelement 115 die Anströmfläche 111 abdeckt und damit das Abgas 16 komplett durch das Substratsegment 110 leitet. Die Figur 15 zeigt eine zweite Maskierstellung 117, in welcher das Markierelement 115 die Anströmfläche 112 abdeckt und damit das Abgas 16 komplett durch das Substratsegment 109 leitet.

Die in Figur 12 bis Figur 15 gezeigten verschwenkbaren oder verdrehbar gelagerten Maskierelemente 99, 100 und 115 ermöglichen es ferner, dass die Substratsegmente durch unterschiedliche Segmentlängen sehr leicht auf einen jeweiligen, günstigen Abgasmassenstrombereich ausgelegt werden können. Ferner kann bei einer Verwendung mehrerer derartiger Maskierelemente 99, 100 und 115, die unabhängig voneinander verdrehbar sind, die Anzahl der durchströmten Substratsegmente 87, 88, 89, 109 und 110 nach Bedarf variiert werden. Weiter ist denkbar, dass eines der Substratsegmente 87, 88, 89, 109 und 110 nur teilweise abgedeckt wird, wodurch sich eine weitere feinere Abstufung - ein Maskiergrad - einer angeströmten Fläche des Substratkomplexes 86 und 108 ermöglichen lässt. Die Anwendung des Maskiergrads ist ferner bei allen Ausführungsformen der Erfindung denkbar.

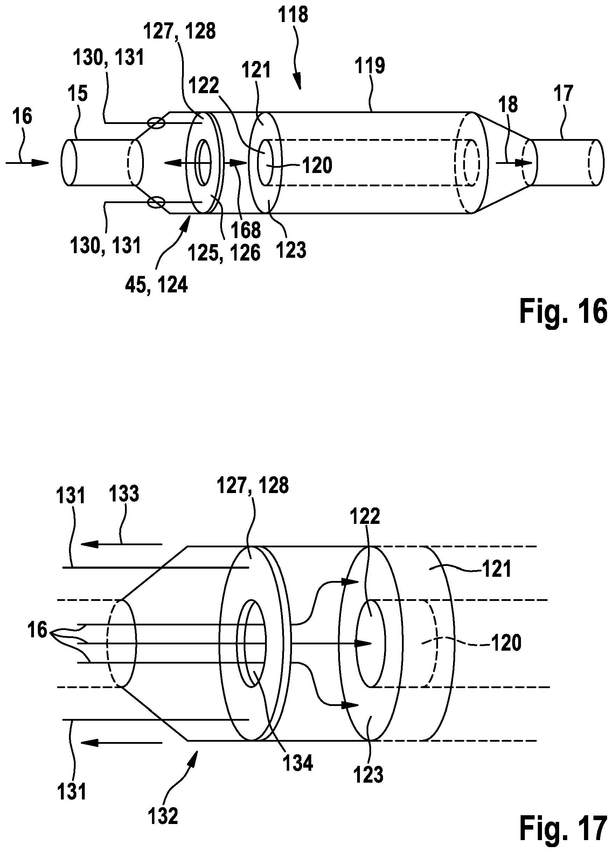

Die Figur 16 zeigt eine nicht erfindungsgemäße Katalysatoranordnung 118 mit einem im Querschnitt kreisförmig ausgestalteten Gehäuse 119, welche ein Abgas 16 über einen Abgaszuführstutzen 15 zugeführt bekommt. Das Abgas 16 wird über eine Einrichtung 45 auf zwei Substrate 120 und 121 geleitet, wobei die Substrate 120 und 121 konzentrisch zu der Längsachse des Gehäuses 119 angeordnet sind. Daraus ergibt sich für das Substrat 120 eine kreisförmige Anströmfläche 122 und für das Substrat 121 eine kreisringförmige Anströmfläche 123. Das durch die Substrate 120 und/oder 121 durchgeleitete Abgas 16 wird als verändertes Abgas 18 über einen Abgasabführstutzen 17 aus der Katalysatoranordnung 118 abgeführt. Die Einrichtung 45 ist eine Maskiereinrichtung 124, welche als Maskierelement 125 ein Ringelement 126 aufweist, dessen Maskierfläche 128 eine Ringfläche 127 und damit eine Abdeckfläche 129 ist. Die Abdeckfläche 129 ist quer zur Abgasströmungsrichtung angeordnet und kann, zusammen mit dem Maskierelement 125 in einer Doppelpfeilrichtung hin- und herverlagert werden. Die Hin- und Herverlagerung wird mittels Zug- und Druckmitteln 130 herbeigeführt, welche mit dem Maskierelement 125 wirkverbunden sind. Dabei sind die Zug- und Druckmittel 130 als Stangenelemente 131 ausgeführt.

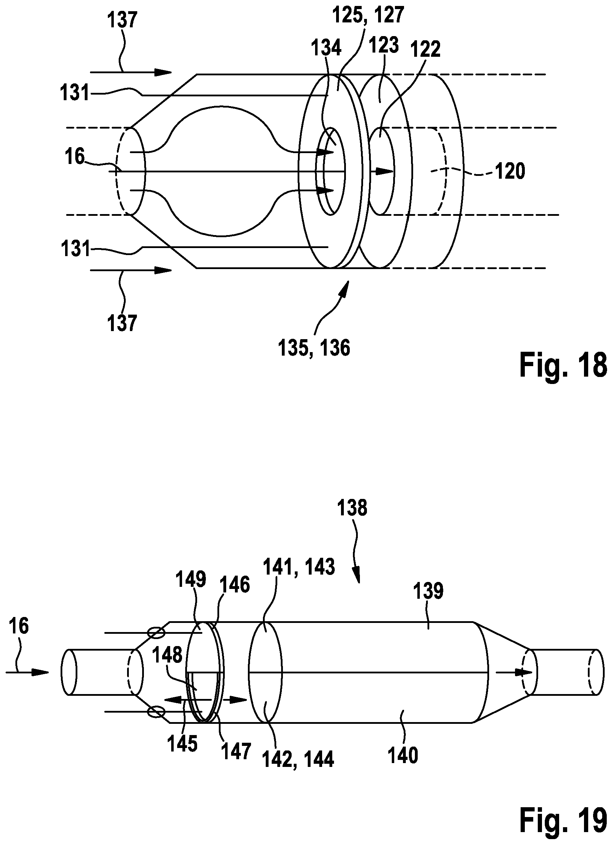

Die Figuren 17 und 18 zeigen - nicht erfindungsgemäß - zwei unterschiedliche Stellungen der Maskiereinrichtung 124 der Figur 16. Dabei zeigt die Figur 17 eine erste Stellung 132 des Maskierelements 125, wobei diese erste Stellung 132 durch Zug an den Stangenelementen 131 entlang einer Pfeilrichtung 133 herbeigeführt ist. In der ersten Stellung 132 strömt das Abgas 16 durch die von der Ringfläche 127 eingeschlossenen Öffnung 134 hindurch. Aufgrund der Beabstandung der Maskierfläche 128 insbesondere zu der ringförmigen Anströmfläche 123 wird dem Abgas 16 ermöglicht, sich nach der Ringöffnung 134 im Gehäuse 119 auszubreiten und sowohl die kreisförmige Anströmfläche 122 als auch die ringförmige Anströmfläche 123 zu beaufschlagen. Auf diese Weise werden beide Substrate 120 und 121 mit Abgas durchströmt.

Die Figur 18 zeigt eine zweite Stellung 135, welche eine Maskierstellung 136 darstellt. Diese wird hergestellt indem das Maskierelement 125 über die Stangenelemente 131 entlang einer Pfeilrichtung 137 durch Druck verlagert wird. Dabei maskiert das Maskierelement 125 mittels seiner Ringfläche 127 die ringförmige Anströmfläche 123. Aufgrund dieser Maskierung kann das Abgas 16 nur direkt von der Ringöffnung 134 in das Substrat 120 eingeleitet werden, welche die zentrisch angeordnete kreisförmig ausgestaltete Anströmfläche 122 aufweist. Daraus ergibt sich, dass ausschließlich das Substrat 120 mit Abgas 16 durchströmt wird. Auch ist es denkbar, durch unterschiedliche Zwischenstellungen des Maskierelements 125 unterschiedlich starke Maskierungen - Maskiergrade - herbeizuführen. Alternativ ist eine Ausführungsform der Maskierscheibe denkbar, die eine zentrisch angeordnete kreisförmige Abdeckfläche aufweist, um die Anströmfläche 122 bei Bedarf abzudecken.

Die Figur 19 zeigt eine nicht erfindungsgemäße Katalysatoranordnung 138. Die Katalysatoranordnung 138 gleicht dem Ausführungsbeispiel der Figur 16, wobei innerhalb der Katalysatoranordnung 138 zwei Substrate 139 und 140 derart angeordnet sind, dass die Substrate 139 und 140 jeweils halbkreisförmige Anströmflächen 141 und 142 ausbilden. Aufgrund der Ausgestaltung der Anströmflächen als Halbkreisflächen 143 und 144 ist ein in einer Doppelpfeilrichtung 145 hin- und herverlagerbares Maskierelement 146 derart ausgestaltet, dass es grundsätzlich als Ring 147 ausgebildet ist, welcher eine Ringöffnung 148 aufweist, wobei die Ringöffnung 148 halbkreisförmig verschlossen ist. Daraus ergibt sich ein Maskierbereich 149, welcher bei Verlagerung zu der Anströmfläche 141 hin die Anströmfläche 141 abdeckt, während der offene Teil der Ringöffnung 148 eine Abgasströmung zu dem Substrat 140 zulässt, wodurch eine Maskierstellung erreicht ist. Durch eine Beabstandung des Maskierelements 146 von den Anströmflächen 141 und 142 kann sich das Abgas 16 nach dem Durchtritt durch den offenen Teil der Ringöffnung 148 ausbreiten und sowohl die Anströmfläche 142 als auch die Anströmfläche 141 mit Abgas beaufschlagen, wodurch die Substrate 139 und 140 gleichzeitig mit Abgas durchströmt werden. Auch in dieser Ausführungsform sind unterschiedliche Maskiergrade erzeugbar.

Eine beabstandete Darstellung der Maskierelemente in Maskierstellungen dient in den Figuren der klareren Darstellung, wobei zu berücksichtigen ist, dass für eine Maskierung ein zu weiter Abstand nachteilig ist, da eine Abdichtung der entsprechenden Anströmflächen vermindert wird.

Grundsätzlich kann die Erfindung immer dann genutzt werden, wenn für unterschiedliche Abgastemperaturen unterschiedlich aktive und damit unterschiedlich ausgestaltete Beschichtungen benötigt werden. So kann beispielsweise eine bei tiefen Temperaturen Kohlenwasserstoff-/Kohlenmonoxid oxidationsaktive Beschichtung um chemische Bestandteile ergänzt sein, die Stickoxide und gegebenenfalls auch Schwelfeloxide bei sehr niedrigen Temperaturen unter 180°C unter mageren Bedingungen, das heißt bei unterstöchiometrischen Kraftstoffaufkommen, oxidiert und speichert und unter fetten Bedingungen, das heißt bei überstöchiometrischen Kraftstoffaufkommen, wieder ausspeichert. Solche Speichermaterialien für Stickoxide können oftmals auch bei vergleichsweise niedrigen Temperaturen in reduzierend wirkender Atmosphäre entschwefelt werden, sofern sie stets bei Temperaturen unter 550°C betrieben werden. Diese zusätzliche Möglichkeiten können mittels der erfindungsgemäßen Einrichtungen 45 gesteuert werden, wenn ein Katalysator 4 mit unterschiedlich aktiven Beschichtungen versehen ist und im Falle einer Regeneration eines nachgeschalteten Partikelfilters 7 heißes Abgas 3 immer durch ein vorbestimmtes Segment mit hochtemperaturstabiler, insbesondere bis ca. 750°C stabiler Beschichtung, geleitet wird.

Darüber hinaus kann die Erfindung auch dann eingesetzt werden, wenn bei einer bestimmten Temperatur die Abgaszusammensetzung gezielt variiert werden soll. Dies wird über die Variation des Maskierungsgrades bei unterschiedlich aktiven Katalysatorsegmenten realisiert. Dadurch können beispielsweise Alterungseffekte kompensiert und für einen nachgeschalteten Katalysator (8,9), wie beispielsweise einem SCR-Katalysator, die stets beste Abgaszusammensetzung im Abgas 3 eingestellt werden.

## Patentansprüche

1. Katalysatoranordnung (10,35,55) für die Behandlung von Abgas (16) einer Brennkraftmaschine (2), wobei die Katalysatoranordnung (10,35,55) in einem gemeinsamen Gehäuse (36) zwei, unterschiedlich auf das Abgas (16) wirkende, jeweils eine Anströmfläche (58,59) und eine Ausströmfläche (30,31,32) für das Abgas (16) aufweisende Substrate (56,57) aufweist, und mit mindestens einer Einrichtung (44) zur Zuführung und/oder Abführung des Abgases (16) zu/von mindestens einem der Substrate (56,57), wobei die Einrichtung (44) als Maskiereinrichtung (45) ausgebildet ist und mindestens ein Maskierelement (71) aufweist, das eine Maskierfläche (53,64) besitzt, die größer als oder gleich groß wie die jeweiligen Anströmfläche (58,59) und/oder Ausströmfläche (30,31,32) ist, wobei das Maskierelement (71) in einer ersten Maskierstellung (68) die eine der Anströmflächen (58,59) und in einer zweiten Maskierstellung (69) die andere der Anströmflächen (58,59) abdeckt, **dadurch gekennzeichnet, dass** die Maskierfläche (53,64) eine Öffnungsfläche (65) ist, die an einem flexiblen Abgasführungskanal (59) eine Kanalöffnung bildet, wobei ein den Substraten (56,57) zugeordnetes und die Kanalöffnung aufweisendes Ende (62) des Abgasführungskanals (59) mittels einer Stelleinrichtung (66) quer zu einer Strömungsrichtung des in den Abgasführungskanal (59) eingeleiteten Abgases (16) verlagerbar ist.

2. Katalysatoranordnung nach Anspruch 1, **dadurch gekennzeichnet, dass** die Maskierfläche (53,64) kleiner als eine Gesamtquerschnittsfläche der Substrate (56,57) ist.

3. Katalysatoranordnung nach einem der vorhergehenden Ansprüche, **dadurch gekennzeichnet, dass** die Öffnungsfläche (65) der Anströmfläche (58,59) oder der Ausströmfläche (30,31,32) entspricht.

4. Katalysatoranordnung nach einem der vorhergehenden Ansprüche, **dadurch gekennzeichnet, dass** der Abgasführungskanal (59) ein flexibler Schlauch, insbesondere ein Wellschlauch (60), ist.

## Claims

1. Catalytic converter arrangement (10, 35, 55) for the treatment of exhaust gas (16) of an internal combustion engine (2), wherein the catalytic converter arrangement (10, 35, 55) has, in a common housing (36), two substrates (56, 57) which have a different action on the exhaust gas (16) and which have in each case one inflow surface (58, 59) and one outflow surface (30, 31, 32) for the exhaust gas (16), and having at least one device (44) for the supply and/or discharge of the exhaust gas (16) to/from at least one of the substrates (56, 57), wherein the device (44) is in the form of a masking device (45) and has at least one masking element (71) which has a masking surface (53, 64) which is larger than or the same size as the respective inflow surface (58, 59) and/or outflow surface (30, 31, 32), wherein the masking element (71), in a first masking position (68), covers one of the inflow surfaces (58, 59) and, in a second masking position (69), covers the other of the inflow surfaces (58, 59), **characterized in that** the masking surface (53, 64) is an opening surface (65) which, at a flexible exhaust-gas-guiding duct (59), forms a duct opening, wherein an end (62), which is assigned to the substrates (56, 57) and which has the duct opening, of the exhaust-gas-guiding duct (59) can be shifted, by means of an adjustment device (66), transversely with respect to a flow direction of the exhaust gas (16) introduced into the exhaust-gas-guiding duct (59).

2. Catalytic converter arrangement according to Claim 1, **characterized in that** the masking surface (53, 64) is smaller than a total cross-sectional area of the substrates (56, 57).

3. Catalytic converter arrangement according to one of the preceding claims, **characterized in that** the opening surface (65) corresponds to the inflow surface (58, 59) or to the outflow surface (30, 31, 32).

4. Catalytic converter arrangement according to one of the preceding claims, **characterized in that** the exhaust-gas-guiding duct (59) is a flexible hose, in particular a corrugated hose (60).

## Revendications

1. Agencement de catalyseur (10, 35, 55) pour le traitement de gaz d'échappement (16) d'un moteur à combustion interne (2), l'agencement de catalyseur (10, 35, 55) présentant, dans un boîtier commun (36), deux substrats (56, 57) agissant différemment sur le gaz d'échappement (16), présentant chacun une surface d'afflux (58, 59) et une surface de sortie (30, 31, 32) pour le gaz d'échappement (16), et comprenant au moins un dispositif (44) pour acheminer et/ou évacuer le gaz d'échappement (16) vers/depuis au moins l'un des substrats (56, 57), le dispositif (44) étant réalisé sous forme de dispositif de masquage (45) et présentant au moins un élément de masquage (71) qui possède une surface de masquage (53, 64) qui est plus grande ou aussi grande que la surface d'afflux (58, 59) et/ou la surface de sortie (30, 31, 32) respective, l'élément de masquage (71), dans une première position de masquage (68), couvrant l'une des surfaces d'afflux (58, 59) et dans une deuxième position de masquage (69), couvrant l'autre des surfaces d'afflux (58, 59), **caractérisé en ce que** la surface de masquage (53, 64) est une surface d'ouverture (65) qui forme une ouverture de conduit au niveau d'un conduit de guidage de gaz d'échappement flexible (59), une extrémité (62) du conduit de guidage de gaz d'échappement (59) associée aux substrats (56, 57) et présentant l'ouverture de conduit pouvant être déplacée au moyen d'un dispositif de réglage (66) transversalement à une direction d'écoulement du gaz d'échappement (16) et introduite dans le conduit de guidage de gaz d'échappement (59).

2. Agencement de catalyseur selon la revendication 1, **caractérisé en ce que** la surface de masquage (53, 64) est inférieure à une surface en section transversale totale des substrats (56, 57).

3. Agencement de catalyseur selon l'une quelconque des revendications précédentes, **caractérisé en ce que** la surface d'ouverture (65) correspond à la surface d'afflux (58, 59) ou à la surface de sortie (30, 31, 32).

4. Agencement de catalyseur selon l'une quelconque des revendications précédentes, **caractérisé en ce que** le conduit de guidage de gaz d'échappement (59) est un tuyau flexible, en particulier un tuyau ondulé (60).
